# EUROPEAN PATENT SPECIFICATION

(11) **EP 0 262 147 B1**
(45) Date of publication and mention of the grant of the patent: **23.06.1993**
(21) Application number: 86906185.3
(22) Date of filing: 29.09.1986
(51) Int. Cl.: C08F 34/00, C08F 26/06, C08F 12/30

(54) **SELF-DOPED POLYMERS**
SELBSTDOPIERTE POLYMERE
POLYMERES AUTO-DOPES

(30) Priority: 24.03.1986 JP 64272/86
(43) Date of publication of application: 06.04.1988
(73) Proprietor: THE REGENTS OF THE UNIVERSITY OF CALIFORNIA, Berkeley, California 94720 (US)
(72) Inventor: WUDL, Fred, Santa Barbara, CA 93111 (US); HEEGER, Alan, Santa Barbara, CA 93101 (US)
(74) Representative: Goldin, Douglas Michael
(86) International application number: US8602042
(87) International publication number: WO8705914

(56) References cited:
- EP-A- 0 203 438
- DE-A- 3 325 893
- DE-A- 3 425 511
- JP-A-58 222 151
- JP-A-59 202 226
- JP-A-60 065 061
- JP-A-60 229 917
- US-A- 3 557 068
- US-A- 4 001 150
- US-A- 4 501 686
- US-A- 4 521 589
- US-A- 4 543 402
- US-A- 4 547 270
- US-A- 4 567 250
- US-A- 4 568 483
- US-A- 4 582 575
- US-A- 4 607 083
- IUPAC, Nomenclature of Organic Chemistry, Sections A,B,C,D,E,F and H, 1979 ed., Pergamon Press, Oxford (GB); p. 185#
- J. PHYS. CHEM., vol. 89, 1985; J.W. THACKERAY et al., pp. 5133-5140#

## Description

### Field of the Invention

This invention relates generally to the field of conducting polymers. More particularly the invention relates to self-doped conjugated polymers in which Bronsted acid groups are covalently bound to the backbone of the polymer.

### Background

The requirements for conductive polymers used in the electronic and other industries are becoming more and more stringent. There is also an increasing need for materials which permit reduction in the size and weight of electronic parts and which themselves exhibit long-term stability and superior performance.

In order to satisfy these demands, active efforts have been made in recent years to develop new conductive macromolecular or polymeric materials. A number of proposals have also been made regarding the potential uses of such new compounds. For example, P.J. Nigrey et al. in Chem. Comm. pp. 591 et seq. (1979) have disclosed the use of polyacetylenes as secondary battery electrodes. Similarly, in the J. Electro Chem. Soc., p. 1651 et seq. (1651) and in Japanese Patent Application Nos. 136469/1981, 121168/1981, 3870/1984, 3872/1984, 3873/1984, 196566/1984, 196573/1984, 203368/1984, and 203369/1984, have also disclosed the use of polyacetylenes, Schiff base-containing quinazone polymers, polarylene quinones, poly-p-phenylenes, poly-2,5-thienylenes and other polymeric materials as electrode materials for secondary batteries. US-A-4, 543, 402 describes hydroxyphenyl-substituted and ether-substituted polypyrroles which are electrical conductors.

The use of polymeric materials in electrochromic applications has also been suggested, in, e.g., A.F. Diaz et al., J. Electroanal. Chem. 111: 111 et seq. (1980), Yoneyama et al., J. Electroanal. Chem. 161, p. 419 (1984) (polyaniline), A.F.Diaz et al., J. Electroanal. Chem. 149: 101 (1983) (polypyrrole), M.A. Druy et al., Journal de Physique 44: C3-595 (June 1983), and Kaneto et al., Japan Journal of Applied Physics 22(7): L412 (1983)(polythiophene).

These highly conductive polymers known in the art are typically rendered conductive through the process of doping with acceptors or donors. In acceptor doping, the backbone of the acceptor-doped polymer is oxidized, thereby introducing positive charges into the polymer chain. Similarly, in donor doping, the polymer is reduced, so that negative charges are introduced into the polymer chain. It is these mobile positive or negative charges which are externally introduced into the polymer chains that are responsible for the electrical conductivity of the doped polymers. In addition, such "p-type" (oxidation) or "n-type" (reduction) doping is responsible for substantially all the changes in electronic structure which occur after doping, including, for example, changes in the optical and infrared absorption spectra.

Thus, in all previous methods of doping the counterions are derived from an external acceptor or donor functionality. During electrochemical cycling between neutral and ionic states, then, the counterions must migrate in and out of the bulk of the polymer. This solid state diffusion of externally introduced counterions is often the rate-limiting step in the cycling process. It is thus desirable to overcome this limitation and thereby increase the response time in electrochemical or electrochromic doping and undoping operations. It has been found that the response time can be shortened if the period required for migration of counterions can be curtailed. The present invention is predicated upon this discovery.

### Summary of the Invention

The present invention provides conducting polymers that can be rapidly doped and undoped, and which are capable of maintaining a stable, doped state for long periods of time relative to conducting polymers of the prior art. The superior properties of the polymers of the present invention result from the discovery that conducting polmers can be made in a "self-doped" form; i.e., the counterion that provides conductivity can be covalently linked to the polymer itself. In contrast to the polymers of the prior art, therefore, the need for externally introduced counterions is obviated, and the rate-limiting diffusion step alluded to above is eliminated as well.

The polymers of the invention can display conductivities of on the order of at least about 1 S/cm. The self-doped polymers may be used as electrodes in electrochemical cells, as conductive layers in electrochromic displays, field effective transistors and Schottky diodes or in any number of applications where a highly conductive polymer which exhibits rapid doping kinetics is desirable.

The present invention relates to a conducting self-doped polymer having along its backbone a π-electron conjugated system which comprises a plurality of monomer units, between about 0.01 and 100 mole % of said units having covalently linked thereto at least one Bronsted acid group. The present invention also encompasses the zwitterionic form of such polymers. Polymers which may form the backbone of the compounds of the present invention include, for example, polypyrroles, polythiophenes, polyanilines and copolymers thereof.

The present invention thus provides a conducting self-doped water-soluble polymer having along its backbone a π-electron conjugated system which comprises from 100 to 500 monomer units between about 0.01 and 100 mole % of said units having at least one Bronsted acid group attached by a covalent linkage, wherein said monomer units having said Bronsted acid group covalently linked thereto are selected frost the following structures (I) or (II): 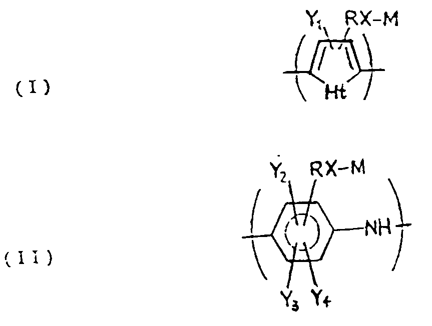
wherein Ht is NH, S, O, Se or Te; Y₁' Y₂, Y₃ and Y₄ are independently selected from the group consisting of hydrogen and -R-X-M, wherein R is a linear or branched alkyl, ether, ester or amide moiety having from 1 to 10 carbon atoms and X is a Bronsted acid anion and M is an atom which when oxidised yields a positive monovalent counterion.

The invention further provides a method of making a water soluble self-doped zwitterionic polymer with monomer units of the formula I as defined above comprising the steps of:
providing an electrolyte solution comprising a monomer having the structure 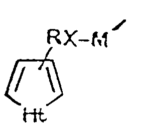
where Ht is NH, S, O, Se or Te; M' is an atom which when oxidized yields a positive monovalent countsrion or M' is methyl; X is a Bronsted acid group; R is a linear or branched alkyl, ether, ester or amide having from 1 to 10 carbon atoms:
immersing in said electrolyte solution, a working electrode and a counterelectrode; and
applying a voltage across said working electrode and said counterelectrode, whereby polymerization of said monomer at said working electrode is effected to produce a polymer having a recurring structure of the formula 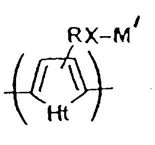
and, when M' is methyl, converting it to an atom M which when oxidised yields a positive monovalent counterion.

The invention still further provides an aqueous solution useful for casting conducting polymeric films, comprising: (a) a self-doped polymer comprised of from 100 to 500 monomer units, wherein 0.01 to 100% of the monomer units have the structure 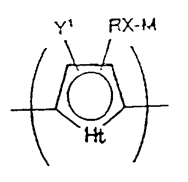
wherein Ht is NH, S, O, Se or Te, Y₁ is hydrogen or RX-M wherein R is a linear or branched alkyl, ester, ether or amide moiety containing from 1 to 10 carbon atoms, X is a Bronsted acid anion, and M is an atom which when oxidised yields a positive monovalent counterion which provides the polymer with its self-doped property; and (b) water present in an amount at least sufficient to dissolve the polymer.

In yet another preferred embodiment of the invention, a conductive polymer is provided containing a recurring zwitterionic structure according to (Ia) or (IIa): 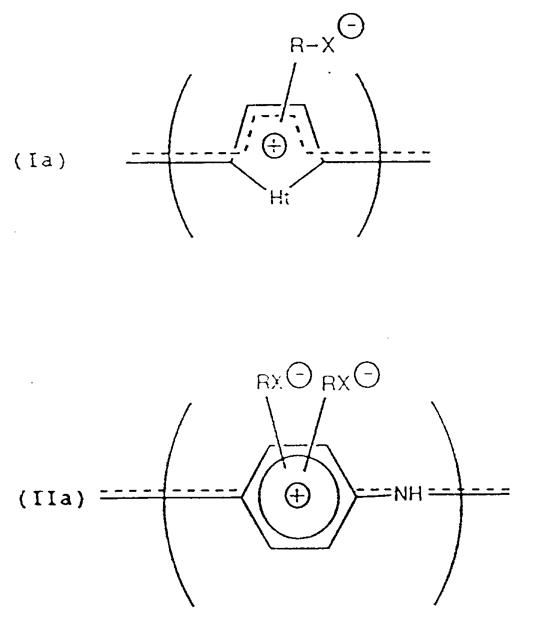
wherein Ht, R and X are as defined above.

The invention is also directed to monomers useful in making the above self-doped polymers, methods of synthesizing the polymers, and devices employing the polymers.

### Brief Description of the Drawings

FIG. 1 is an infrared spectrum of poly(methyl thiophene-3-(2-ethanesulfonate));
FIG. 2 is an infrared spectrum of poly(thiophene-3-(2-ethanesulfonic acid sodium salt));

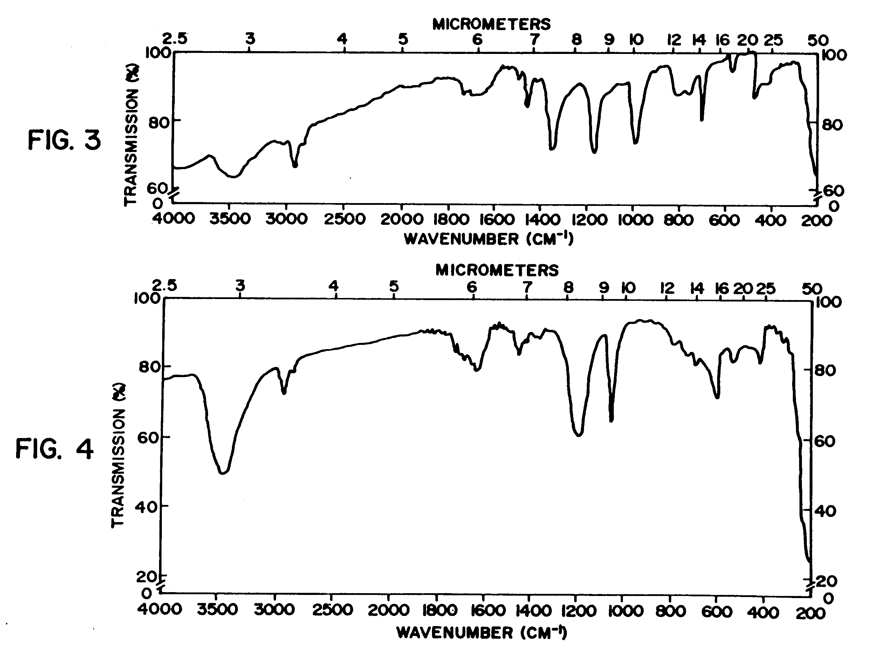

FIG. 3 is an infrared spectrum of poly(methyl thiophene-3-(4-butanesulfonate));
FIG. 4 is an infrared spectrum of poly(thiophene-3-(4-butanesulfonic acid sodium salt));
FIG. 5 depicts a series of vis-near ir spectra of poly(thiophene-3-(2-ethanesulfonic acid) sodium salt);
FIG. 6 depicts a series ov vis-near ir spectra of poly(thiophene-3-(4-butanesulfonic acid) sodium salt):
FIG 7 depicts a series ov vis-near ir spectra of poly(methylthiophene-3-(4-butanesulfonate));
FIG. 8 illustrates the results of cyclic voltammetry carried out on films of poly(thiophene-3-(2-ethanesulfonic acid)); and
FIG. 9 depicts a series of vis-near ir spectra of poly(thiophene-3-(2-ethanesulfonic acid)).

### Detailed Description

The terms "conducting" or "conductive" indicate the ability to transmit electric charge by the passage of ionized atoms or electrons. "Conducting" or "conductive" compounds include compounds which embody or incorporate mobile ions or electrons as well as compounds which may be oxidized so as to embody or incorporate mobile ions or electrons.

The term "self-doping" means that a material may be rendered conducting or conductive without external introduction of ions by conventional doping techniques. In the self-doping polymers disclosed herein, potential counterions are covalently bound to the polymer backbone.

The term "Bronsted acid" is used to refer to a chemical species which can act as a source of one or more protons, i.e. as a proton-donor. See, e.g., the McGraw-Hill Dictionary of Scientific and Technical Terms (3rd Ed. 1984) at page 220. Examples of Bronsted acids thus include carboxylic, sulfonic and phosphoric acids.

The term "Bronsted acid group" as used herein means Bronsted acids as defined above, anions of Bronsted acids (i.e. where the protons have been removed), and salts of Bronsted acids, in which a Bronsted acid anion is associated with a monovalent cationic counterion.

"Monomer units" as used herein refer to the recurring structural units of a polymer. The individual monomer units of a particular polymer may be identical, as in a homopolymer, or different, as in a copolymer.

The polymers of the present invention, which may be copolymers or homopolymers, have a backbone structure that provides a π-electron conjugated system. Examples of such polymer backbones include, but are not limited to, polypyrroles, polythiophenes, polyisothianaphthenes, polyanilines, poly-p-phenylenes and copolymers thereof. The recurring structure described above may constitute anywhere from 0.01 to 100 mole % monomers substituted with one or more "-R-X-M" functionalities. In applications requiring high conductivity, usually at least about 10 mole % of the monomer units are substituted, typically 50 to 100 mole %. In semiconductor applications. it is usually less than 10 mole % of the monomer units that are substituted. sometimes as little as 0.1 or 0.01 mole %.

Polyheterocycle monomer units represented by Formulae I and Ia include monomer units which are either mono-substituted or di-substituted with the -R-X-M functionality. Similarly, the polyaniline monomer units represented by Formulae II and IIa include monomer units which are substituted with 1, 2, 3 or 4 "-R-X-M" substitutents. Copolymers encompassing these different types of substituted monomer units are envisioned by the present invention as well. In both the homopolymers and copolymers of the present invention, between 0.01% and 100 mole % of the polymer should be provided with Bronsted acid groups.

In a preferred embodiment, the present invention encompasses electrically neutral polymers given by Formula I or II above. In order to render the polymers conductive, they must be oxidized so as to remove the M moiety and yield a polymer containing a recurring zwitterionic structure according to Ia or IIa. In the preferred embodiment, for example, Ht may be selected from the group consisting of NH, S, O, Se and Te; M may be H, Na, Li or K; X may be CO₂, SO₃ or HPO₃; and R is a straight chain alkyl or ether group (i.e., -(CH₂)ₓ- or -(CH₂)_{y}O(CH₂)_{z}-,
where x and (y+z) are from 1 to 10). In a particularly preferred embodiment, Ht is NH or S: M is H, Li or Na; X is CO₂ or SO₃; R is a linear alkyl having from 2 to 4 carbon atoms; and the substituted monomers of the polymers are either mono- or di-substituted with -R-X-M groups.

In order to "undope" the zwitterionic form of the polymers, an electric charge may be supplied in the direction contrary to that used in doping (alternatively, a mild reducing agent may be used as discussed below). The M moiety is caused to migrate into the polymer and neutralize the X⁻ counterion. The undoping process is thus as rapid as the doping process.

Scheme I and Scheme II represent the oxidation and reduction of the above polymers (the mono-substituted embodiment is illustrated), i.e. the transition between the electrically neutral and conductive zwitterionic forms: 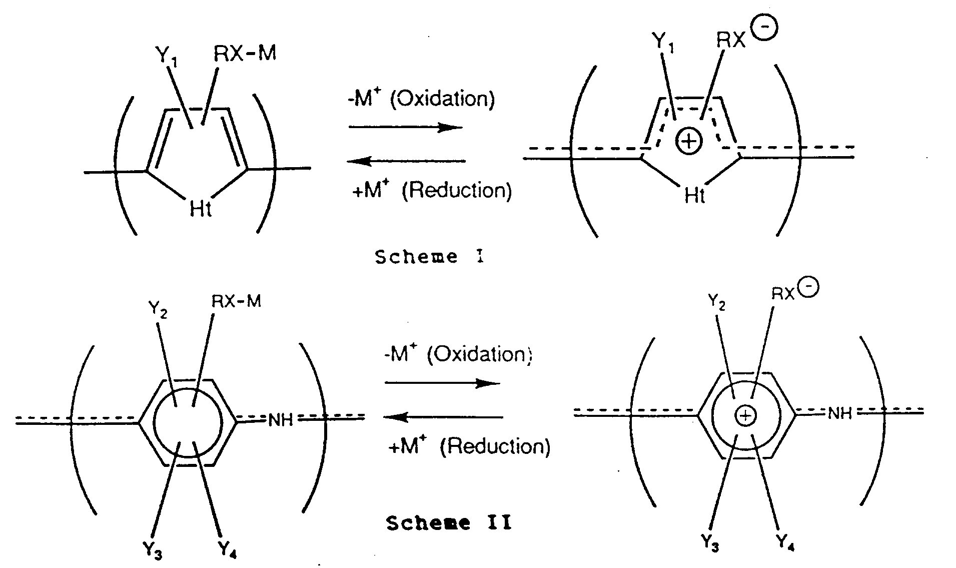
Where X is CO₂, the above electrochemical conversion is strongly pH-dependent in the pH range of 1-6 (the pKₐ for X=CO₂ and M=H in Formula I is about 5). Where X is SO₃, on the other hand, the above electrochemical reaction is pH-independent over the much larger pH range of about 1-14 (the pKₐ for X=SO₃ and M=H in Formula II is about 1). The sulfonic acid derivative is thus charged at virtually any pH, while the carboxylic acid derivative is charged at only lower pH. By varying the pH of the polymer solution, then, it is easier to control the conductivity of the carboxylic acid derivatives than that of the corresponding sulfonic acid derivatives. The particular Bronsted acid moiety selected will thus depend on the particular application.

These self-doped polymers have conductivities of at least about 1 S/cm (see Example 14) and typically have chain lengths of about several hundred monomer units. Typically, chain lengths range from 100 to 500 monomer units: higher molecular weights are preferred.

In the practice of the present invention, a Bronsted acid group is introduced into a polymer to make it self-doping. The Bronsted acid may be introduced into a monomer, followed by polymerization or copolymerization. One may also prepare a polymer or copolymer of the unsubstituted monomers of Formulae I or II and then introduce the Bronsted acid into the polymer backbone.

Covalently linking a Bronsted acid to a monomer or polymer is within the skill of the art. See, e.g., J.Am.Chem. Soc. 70:1556 (1948). By way of illustration, an alkyl group on a monomer or polymer backbone can be concatenated to an alkyl halide using N-bromo succinamide (NBS) as shown in Scheme III: 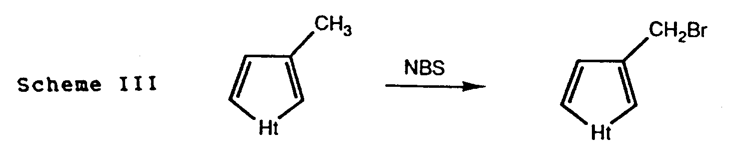
The halide can then be treated with sodium cyanide/sodium hydroxide or sodium sulfite followed by hydrolysis to give a carboxylic or sulfonic Bronsted acid, respectively, as shown in Scheme IV: 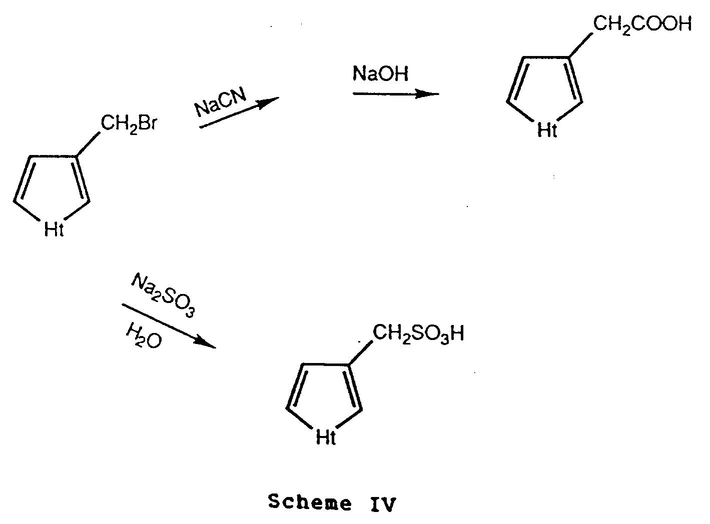
Another example showing the addition of a Bronsted acid with an ether linking group is shown in Scheme V: 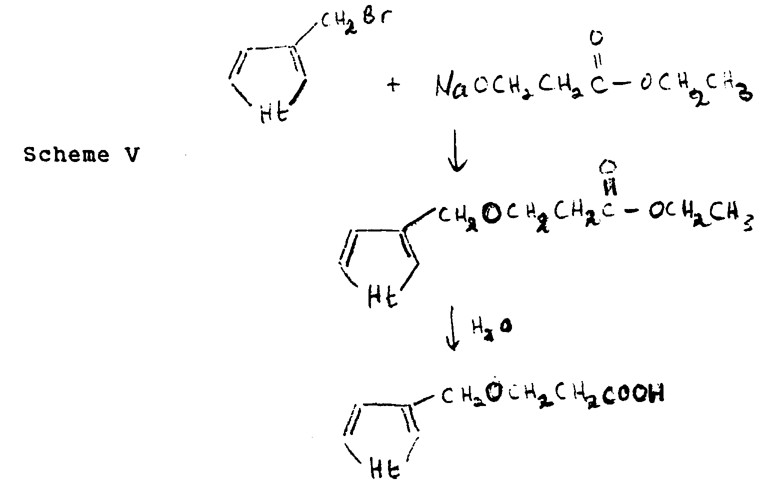
Syntheses of various monomers useful in the practice of the present invention are set forth in Examples 1 through 12. below.

The polymers of the present invention may be synthesized by the electrochemical methods set forth in. e.g., S. Hotta et al., Synth. Metals 9:381 (1984), or by chemical coupling methods such as those described in Wudl et al., J. Org. Chem. 49:3382 (1984), Wudl et al., Mol. Cryst. Liq. Cryst. 118:199 (1985) and M. Kobayashi et al., Synth. Metals. 9:77 (1984).

When synthesized by electrochemical methods (i.e., anodically), the polymeric zwitterions are produced directly. With the chemical coupling methods, the neutral polymers result. The preferred synthetic method is electrochemical, and is exemplified below by the production of a substituted polyheterocyclic species.

A solution containing the monomer III 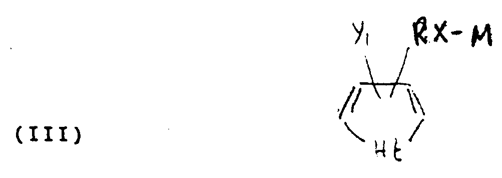
with Ht, Yᵢ, R, X and M as given above, is provided in a suitable solvent such as acetonitrile (particularly suitable for the sulfonic acid derivative, i.e. where X=SO₃) along with an electrolyte such as tetrabutylammonium perchlorate or tetrabutylammonium fluoroborate. A working electrode of platinum, nickel, indium tin oxide (ITO)-coated glass or other suitable material is provided, as is a counterelectrode (cathode) of platinum or aluminum, preferably platinum. A current of between 0.5 and 5 mA/cm² is applied across the electrodes, and depending on the extent of polymerization desired (or the thickness of the polymeric film on a substrate), the electropolymerization reaction is carried out for between a few minutes and a few hours. The temperature of the polymerization reaction can range from -30°C to 25°C, but is preferably between 5°C and 25°C.

Reduction of the zwitterionic polymer so produced to the neutral, undoped form may be effected by electrochemical reduction or by treatment with any mild reducing agent, such as methanol or sodium iodide in acetone. This process should be allowed to proceed for at least several hours in order to ensure completion of the reaction.

The sulfonic acid monomer (X=SO₃) is polymerized as the methyl ester (see Examples 14 and 15), while the carboxylic acid derivative (X=CO₂) may be prepared in its acid form. After polymerization of the sulfonic acid derivative, the methyl group is removed in the treatment with sodium iodide or the like.

The polyanilines represented by Formulae II and IIa may be synthesized electrochemically is above or they may be prepared by the reaction of a phenylenediamine with a suitably substituted cyclohexanedione. Scheme VI below, illustrates this latter synthesis: 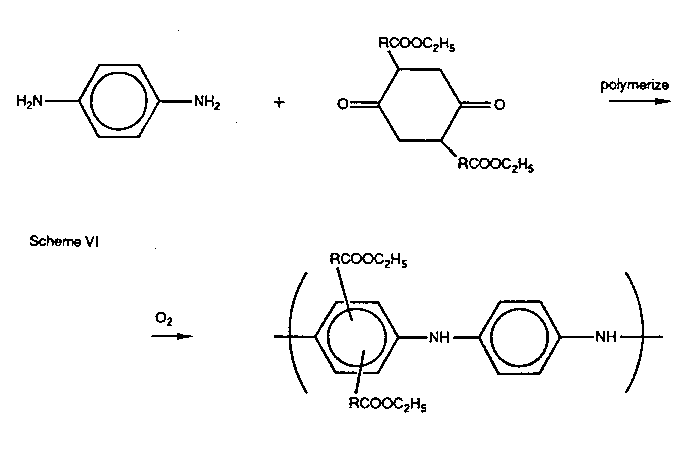
R, X and M are as defined above.

Copolymerization of different types of monomers represented in Formulae I or II may be effected according to the same procedures outlined above. In a preferred embodiment, the majority of monomers are at least mono-substituted with an -R-X-M group as described.

Composites of the polymers of Formulae I and II may be prepared in conjunction with water-soluble polymers such as polyvinyl alcohol (see Example 17) and the polysaccharides. Because the polymers of the present invention may be fairly brittle, preparation of composites using additional polymeric materials provides polymers which are more flexible and less brittle. Films may be cast from aqueous solutions of polymers given by Formulae I or II also containing a predetermined amount of one or more additional water-soluble polymers. Since the key procedural criterion in this step is dissolving two or more polymers in water, the only practical limitation on the additional polymers is that they be water-soluble.

The polymers of the present invention offer a specific advantage over conventional conducting polymers for use as electrodes in electrochemical cells. Because the counterions are covalently bound to the polymer, the cell capacity is not limited by electrolyte concentration and solubility. This means that in optimized cells, the total amount of electrolyte and solvent can be reduced considerably, thus enhancing the energy density of the resulting battery. The facile kinetics of ion transport provided by the novel self-doping mechanism leads to rapid charge and discharge as well as to faster electrochromic switching. Electrodes fabricated using the polymers of the invention may be fabricated entirely from these polymers or from conventional substrates coated with these polymers. Conventional substrates may include, for example, indium tin oxide coated glass, platinum, nickel, palladium or any other suitable anode materials. When used as an electrode, the internal self-doping of the polymer effects the transition represented by Scheme I.

The self-doped conducting polymers of the invention also offer specific advantages over conventional conducting polymers for use in a variety of device applications where long term performance requires that the dopant ions not be continuously mobile. Examples of such uses include fabrication of Schottky diodes, field effective transistors, etc. Because the dopant ion is covalently bound to the polymer chain in self-doped polymers, the problem of diffusion of the ion (e.g., in the vicinity of a junction or interface) is solved.

### Examples

It is to be understood that while the invention has been described in conjunction with the preferred specific embodiment thereof, that the foregoing description as well as the examples which follow are intended to illustrate and not limit the scope of the claimed invention. Other aspects, advantages and modifications within the scope of the invention will be apparent to those skilled in the art to which the invention pertains.

### Example 1

### 2-(3-Thienyl)-Ethyl Methanesulfonate

To a solution of 5.0 g (7.8x10⁻³ mol) of 2-(3-thienyl)-ethanol (Aldrich Chemical) in 10 ml of dry, freshly distilled pyridine was added 3.62 ml (1.2 equiv.) of methanesulfonyl chloride in 20 ml of pyridine at 5-10°C. The addition was carried out gradually, over a period of about 15-20 min. The reaction mixture was stirred overnight at room temperature and was quenched by pouring into a separatory funnel containing water and ether. The layers were separated and the aqueous layer was extracted three times with ether. The combined organic extracts were extracted once with 10% hydrochloric acid, followed by water and drying over Na₂SO₄. Evaporation of the solvent afforded 5.3g of a light brown oil (65% yield), and tlc (CHCl₃) showed a single spot. Chromatographic purification on silica gel afforded a light yellow oil. Nmr (CDCl₃, δ rel TMS) 2.9s, 3H: 3.1t, 2H; 4.4t, 2H; 7.0-7.4m, 3H. Ir (neat, ν, cm⁻¹) 3100w, 2930w, 29202, 1415w, 1355s, 1335s, 1245w, 1173s, 1080w, 1055w, 970s, 955s, 903m, 850m, 825w, 795s, 775s, 740w. MS, 206.0.

### Example 2

### 2-(3-Thienyl)-Ethyl Iodide

The above methanesulfonate (5.36, 2.6x10⁻² mol) was added to a solution of 7.7g (2 equiv) of NaI in 30 ml of acetone and allowed to react at room temperature for 24 hr. The CH₃SO₃Na which had precipitated was separated by filtration. The filtrate was poured into water, extracted with chloroform, and the organic layer was dried over MgSO₄. Evaporation of the solvent afforded a light brown oil which upon chromatographic purification gave 5.05g of a light yellow oil (82.5%). Nmr (CDCl₃, δ rel to TMS): 3.2m, 4H; 7.0-7.4m, 3H. Ir (KBr, ν, cm⁻¹): 3100m, 2960s, 2920s, 2850w, 1760w, 1565w, 1535w, 1450m, 1428s, 1415s, 1390w, 1328w, 1305w, 1255s, 1222m, 1170s, 1152m, 1100w, 1080m, 1020w, 940m, 900w, 857s, 840s, 810w, 770s, 695s, 633m. MS 238.

### Example 3

### Sodium-2-(3-Thienyl)-Ethanesulfonate

To a 10 ml aqueous solution of 5.347g (4.2x10⁻² mol) of Na₂SO₃ was added 5.05g (0.5 equiv) of the above iodide and the reaction mixture was heated to 70°C for 45 hr. The resulting mixture was evaporated to dryness followed by washing with chloroform to remove the unreacted iodide (0.45 g) and acetone to remove the sodium iodide. The remaining solid was a mixture of the desired sodium salt contaminated with excess sodium sulfite and was used in subsequent steps without further purification. Nmr (D₂O, δ rel TMS propanesulfonate): 3.1s, 4H; 7.0-7.4m, 3H. Ir (KBr, ν, cm⁻¹, Na₂SO₃ peaks subtracted) 1272m, 1242s, 1210s, 1177s, 1120m, 1056s, 760m, 678w.

### Example 4

### 2-(3-Thienyl)-Ethanesulfonyl Chloride

To a stirred suspension of 2 g of the above mixture of salts prepared in Example 3 was added dropwise 2 ml of distilled thionyl chloride. The mixture was allowed to stir for 30 min. The white solid resulting from ice-water quench was separated by filtration and recrystallized from chloroform-hexane to afford 800 mg of white crystals, mp 57-58°C. Nmr (CDCl₃, δ rel TMS) 3.4m, 2H: 3.9m, 2H; 7.0-7.4m, 3H. Ir (KBr, ν, cm⁻¹) 3100w, 2980w, 2960w, 2930w, 1455w, 1412w, 1358s, 1278w, 1260w, 1225w, 1165s, 1075w, 935w, 865m, 830m, 790s, 770w, 750m, 678s, 625m. E1. Anal. Calcd. for C₆H₇ClO₂S₂: C, 34.20; H, 3.35: Cl, 16.83; S, 30.43. Found: C, 34.38; H, 3.32; Cl, 16.69; S, 30.24.

### Example 5

### Methyl 2-(3-Thienyl)-Ethanesulfonate

To a stirred solution of 105 mg (5x10⁻⁴ mol) of the above acid chloride (prepared in Example 4) in 1.5 ml of freshly distilled (from molecular sieves) methanol was added, at room temperature, 1.74 ml (2 equiv) of N,N-diisopropylethylamine. The reaction mixture was stirred for 12 hr and then transferred to a separatory funnel containing dilute, aqueous HCl and was extracted with chloroform thrice. After the combined organic layers were dried with Na₂SO₄, the solvent was evaporated to afford a light brown oil which was purified by chromatography on silica gel with chloroform as eluent. The resulting colorless solid, obtained in 90% yield had an mp of 27-28.5°C. Ir (neat film, v, cm⁻¹) 3100w, 2960w, 2930w, 1450m, 1415w, 1355s, 1250w, 1165s, 985s, 840w, 820w, 780m, 630w. 615w. Uv-vis [λmax, MeOH, nm(ε)] 234 (6x10³). Nmr (CDCl₃, δ rel TMS) 7.42-7.22q, 1H; 7.18-6.80m, 2H; 3.85s, 3H; 3.6-2.9m, 4H. El. Anal. Calcd. for C₇H₁₀O₃S₂: C, 40.76; H, 4.89; S, 31.08. Found: C, 40.90; H, 4.84; S, 30.92.

### Example 6

### Ethyl-2-Carboxyethyl-4-(3-Thienyl)-Butanoate

To a stirred solution of 11.2 g (69.94 mmol) of diethyl malonate in 60 ml of freshly distilled DMF, was added 2.85 g (69.94 mmol) of a 60% oil dispersion of NaH. After 30 min stirring, 15.86 g (66.61 mmol) of 2-(3-thienyl)-ethyl iodide (prepared as described above) in 20 ml of DMF was added dropwise over 10 min. The reaction mixture was stirred at room temperature for one hr and then heated to 140° for four hr. Upon cooling, the reaction was poured into ice-dil. HCl and extracted six times with ether. The combined organic layers were washed with water, dried with Na₂SO₄ and evaporated to afford a brown oil. After chromatography on silica gel (50% hexane in chloroform), a colorless oil was obtained in 98% yield. El. Anal. Calcd. for C₁₃H₁₈O₄S: C, 57.76; H, 6.71; S, 11.86. Found: C, 57.65; H, 6.76; S, 11.77. Nmr (CDCl₃, δ rel TMS) 7.40-7.20t, 1H; 7.10-6.86d, 2H; 4.18q, 4H; 3.33t, 1H; 2.97-1.97m, 4H; 1.23t, 6H. Ir (neat film, v, cm⁻¹) 2980w, 1730s, 1450w, 1370w, 775w.

### Example 7

### 2-Carboxy-4-(3-Thienyl)-Butanoic Acid

To a stirred solution of 1.4 g (24.96 mmol) of potassium hydroxide in 7.0 ml of 50% ethanol in water, was added the above diester (765 mg, 2.83 mmol) prepared in Example 6. The resulting reaction was allowed to stir at room temperature for two hr, followed by overnight reflux. The resulting mixture was poured into ice-10% HCl, followed by three ether extractions. The combined organic layer was dired with Na₂SO₄ and evaporated to afford a white solid in 90% which was recrystallized from chloroform-hexane to produce colorless needles. Mp. 118-119°C; nmr (DMSO/d6, δ rel TMS) 12.60br s, 2H; 7.53-6.80m. 3H; 3.20t, 1H; 2.60t, 2H; 1.99q, 2H. Ir (KBr, v, cm⁻¹) 2900w, 1710s, 1410w, 1260w, 9250, 780s. El. Anal. Calcd. for C₉H₁₀O₄S: C, 56.45; H, 5.92; S, 18.83. Found: C, 56.39; H, 5.92; S, 18.67.

### Example 8

### 4-(3-Thienyl)-Butyl Methanesulfonate

4-(3-thienyl)-butanoic acid (CA 69:18565x, 72:121265k) was prepared by standard thermal decarboxylation of the carboxy acid prepared in Example 7. This compound was then reduced to give 4-(3-thienyl)-butanol (CA 70:68035r, 72: 121265k) also using standard methods.

To a solution of 1.05 g (6.7x10⁻³ mol) of 4-(3-thienyl)-butanol in 25 ml of dry, freshly distilled pyridine was added 0.85 g (1.1 equiv.) of methane-sulfonyl chloride at 25°C. The addition was gradual and carried out over a several minute period. The reaction mixture was stirred for 6 hr at room temperature and quenched by pouring into a separtory funnel containing water-HCl and ether. The layers were separated and the aqueous layer was extracted once with 10% hydrochloric acid, followed by extraction with water and drying with Na₂SO₄. Evaporation of the solvent afforded 1.51 g of a light brown oil (95% yield), tlc (CHCl₃) showed a single spot. El. Anal. Calcd. for C₉H₁₄O₃S₂: C, 46.13; H, 6.02; S, 27.36.
Found: C, 45.92; H, 5.94; S, 27.15. Nmr (CDCl₃, δ rel TMS) 2.0-1.5 brs, 4H; 2.67 brt, 2H; 2.97s, 3H; 4.22t, 2H; 7.07-6.80d, 2H; 7.37-7.13, 1H.

### Example 9

### 4-(3-Thienyl Butyl Iodide)

The above methanesulfonate (1.51 g, 6.4x10⁻³ mol) prepared in Example 8 was added to a solution of 1.93 g (2 equiv.) of NaI in 14 ml of acetone and allowed to react at room temperature overnight. The reaction mixture was then heated to reflux for 5 hr. The CH₃SO₃Na which had precipitated was separated by filtration. The filtrate was poured into water, extracted with chloroform and the organic layer was dried with MgSO₄. Evaporation of the solvent afforded a light brown oil which upon chromatographic purification (silica gel, 60% hexane in chloroform) gave 1.34 g of a colorless oil (78%). Nmr (CDCl₃, δ rel to TMS) 1.53-2.20m, 4H; 2.64t, 2H; 3.17t, 2H; 6.83-7.10d, 2H; 7.13-7.37t, 1H. Ir (KBr, v, cm⁻¹) 2960s, 2905s, 2840s, 1760w, 1565w, 1535w, 1450s, 1428s, 1415s, 1190s, 750s, 695m, 633m. MS 266.0. El. Anal. Calcd. for C₈H₁₁IS: C, 36.10; H, 4.17; I, 47.68; S, 12.05. Found: C, 37.68; H, 4.35; I, 45.24; S. 12.00

### Example 10

### Sodium-4-(3-Thienyl)-Butanesulfonate

To a 2 ml aqueous solution of 1.271 g (1x10⁻² mol) of Na₂SO₃ was added 1.34 g (0.5 equiv) of the above iodide prepared in Example 9. The reaction mixture was heated to reflux for 18 hr. The resulting mixture was evaporated to dryness, followed by washing with chloroform to remove the unreacted iodide and with acetone to remove the sodium iodide. The remaining solid was a mixture of the desired sodium salt contaminated with excess sodium sulfite and was used in subsequent steps without further purification. Nmr (D₂O, δ rel TMS propane-sufonate) 1.53-1.97m, 4H; 2.47-3.13m, 4H; 6.97-7.20d, 2H; 7.30-7.50q, 1H. Ir (KBr, v, cm⁻¹, Na₂SO₃ peaks subtracted) 2905w, 1280m, 1210s, 1180s, 1242m, 1210s, 1180s, 1130s, 1060s, 970s, 7700s, 690w, 630s, 605s.

### Example 11

### 4-(3-Thienyl)-Butanesulfonyl Chloride

To a stirred suspension of 1.00 g of the above mixture of salts (from Example 10) in 10 ml of freshly distilled DMF was added dropwise 1.43 g of distilled thionyl chloride. The mixture was allowed to stir for 3 hr. The slighly yellow oil resulting from ice-water quench was isolated by twice extracting with ether, followed by drying of the organic layer with Na₂SO₄ to yield 566 mg of a slightly yellow oil which crystallized slowly (mp 26-27°) after chromatography (silica gel, chloroform). Nmr (CDCl₃, δ rel TMS) 1.45-2.38m, 4H; 2.72t, 2H; 3.65t, 2H; 6.78-7.12d, 2H; 7.18-7.42, 1H. Ir (neat film, v, cm⁻¹) 3120w, 2920s, 2870m, 1465m, 1370s, 1278w, 1260w, 1160s, 1075w, 935w, 850w, 830m, 7765s, 680m, 625w, 585s, 535s, 510s. El. Anal. Calcd. for C₈H₁₁ClO₂S₂: C, 40.25; H, 4.64; Cl, 14.85; S, 26.86. Found: C, 40.23: H, 4.69; Cl, 14.94; S, 26.68.

### Example 12

### Methyl 4-(3-Thienyl)-Butanesulfonate

To a stirred solution of 362 mg (1.5x10⁻³ mol) of the above acid chloride prepared in Example 11 in 6 ml of freshly distilled (from molecular sieves) methanol was added, at room temperature, 392 mg (2 equiv) of N,N-diisopropylethylamine. The reaction mixture was stirred for 2 hr and then transferred to a separatory funnel containing dilute, aqueous HCl and was extracted with chloroform thrice. After the combined organic layers were dried with Na₂SO₄, the solvent was evaporated to afford a light brown oil which was purified by chromatography on silica gel with 40% hexane in chloroform as eluent. The resulting colorless oil, obtained in 84% yield had the following properties: El. Anal. Calcd. for C₉H₁₄S₂O₃: C, 46.13; H, 6.02; S, 27.36. Found: C, 45.97; H, 5.98; S, 27.28. Ir (neat film, v, cm⁻¹) 3100w, 2970m, 2860w, 1460m, 1410w, 1350s, 1250w, 1160s, 982s, 830m, 800m, 770s, 710w, 690w, 630w, 613w, 570m. Uv-vis [λmax, MeOH, nm (e)] 220 (6.6x10³). Nmr (CDCl₃, δ rel to TMS) 7.33-7.13 (t, 1H), 7.03-6.77 (d, 2H), 3.83 (s, 3H), 3.09 (t, 2H), 2.67 (t,2 H), 2.2-1.5 (m, 4H).

### Example 13

### Polymerization of Thiophene-3-Acetic Acid

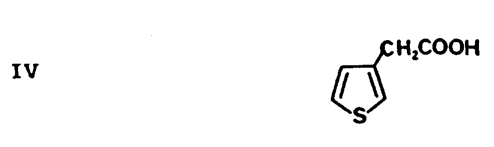

Thiophene-3-acetic acid (Formula IV) was polymerized at room temperature by the electrochemical polymerization method of S. Hotta et al., Synth. Metals, supra, using acetonitrile as the solvent and LiClO₄ as the electrolyte. Blue-black films were produced, indicating formation of the zwitterionic polymer of Formula I a(R= -CH₂-, Ht=S, X=CO₂,). The polymer films were electrochemically cycled and observed to undergo a color change from blue-black to yellowish brown, indicating reduction of the zwitterionic form of the polymer to the neutral form represented by Formula I. The infrared spectrum was in agreement with the proposed structure.

### Example 14

### Poly(Thiophene-3-(2-Ethanesulfonic Acid Sodium Salt)

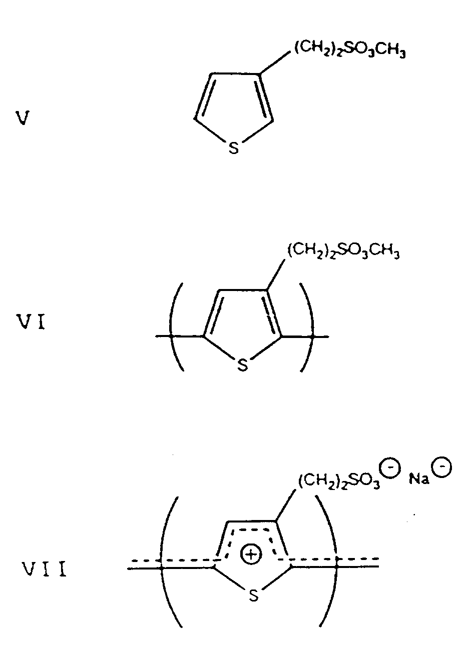

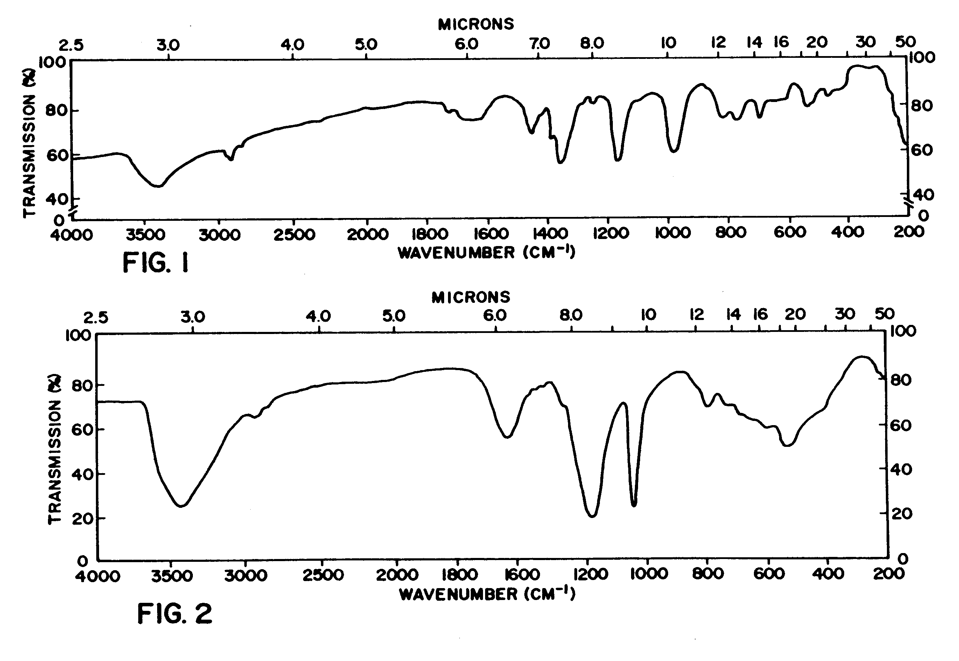

Methyl thiophene-3-(2-ethanesulfonate) (Formula V) was prepared as above. Polymerization of the above monomer was carried out as in Example 13, except that the polymerization temperature was maintained at -27°C. The resultant polymer ("methyl P3-ETS", Formula VI) was then treated with sodium iodide in acetone to remove the methyl group from the sulfonic acid functionality and produce, in quantitative yield (∼98%), the corresponding sodium salt of the polymer, i.e. of poly(thiophene-3-(2-ethanesulfonic acid)) ("P3-ETSNa") as shown in Formula VII. The polymeric methyl aster and the polymeric sodium salt were characterized by infrared and ultraviolet spectroscopy as well as by elemental analysis (see Figures 1 and 2). The sodium salt was found to be soluble in all proportions in water, enabling the casting of films from aqueous solution.

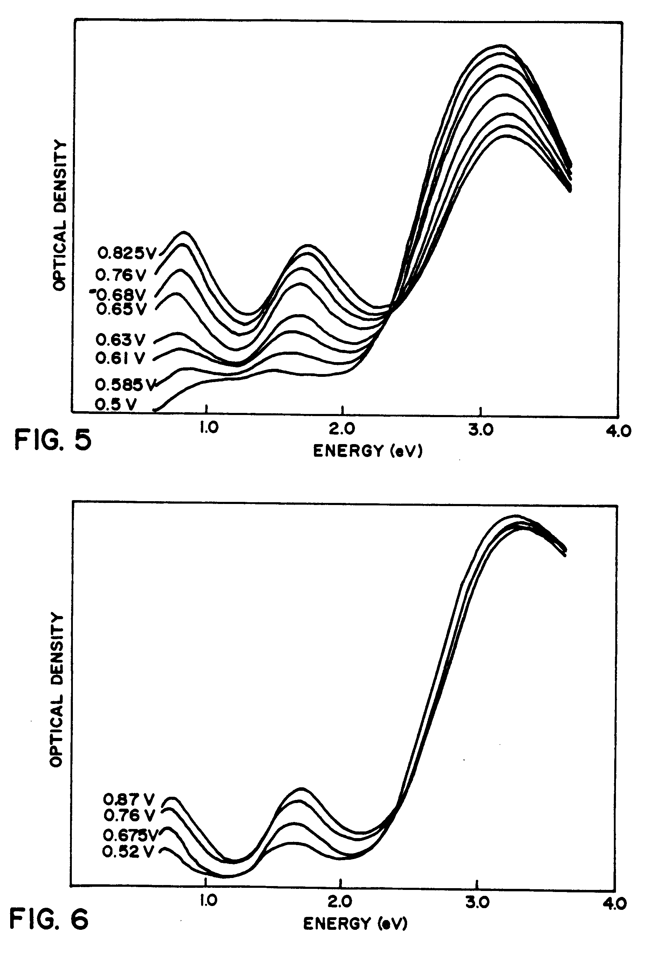

Electrochemical cells were constructed in glass to demonstrate electrochemical doping and charge storage via in situ optoelectrochemical spectroscopy. The cells included a film of the above polymer on ITO-coated glass (which served as the anode), a platinum counterelectrode (cathode) and a silver/silver chloride reference electrode with tetrabutylammonium perchlorate as electrolyte. Figure 5 depicts a series of vis-near ir spectra of the P3-ETSNa taken with the cell charged to a series of successively higher open circuit voltages. The results were typical of conducting polymers in that the π-π* transition was depleted with a concomitant shift of oscillator strength into two characteristic infrared bands. The results of Figure 5 demonstrate both reversible charge storage and electrochromism.

The electrical conductivity was measured with the standard 4-probe techniques using a film of the polymer cast from water onto a glass substrate onto which gold contacts had been previously deposited. upon exposure to bromine vapor, the electrical conductivity of P3-ETSNa rose to ∼1 S/cm.

### Example 15

### Poly(Thiophene-3-(4-Butanesulfonic Acid Sodium Salt))

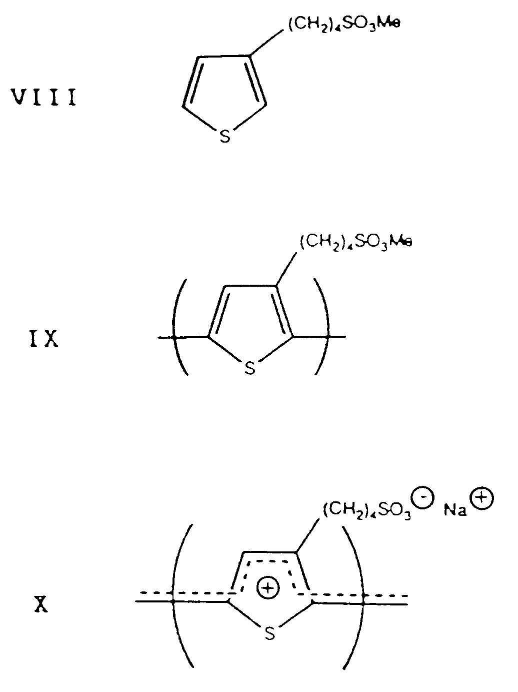

Methyl thiophene-3-(4-butanesulfonate) (Formula VIII) was prepared as above. Polymerization was carried out under conditions identical to those set forth in Examples 13 and 14 above. The resultant polymer (designated "methyl P3-BTS", Formula IX) was treated with sodium iodide in acetone to produce, in quantitative yield, the polymeric sodium salt of thiophene-3-(4-butanesulfonic acid) ("P3-BTSNa", Formula X). The polymeric methyl ester (Formula IX) and the corresponding sodium salt (Formula X) were characterized spectroscopically (ir, uv-vis) and by elemental analysis. The sodium salt was discovered to be soluble in all proportions in water, enabling the casting of films from aqueous solution.

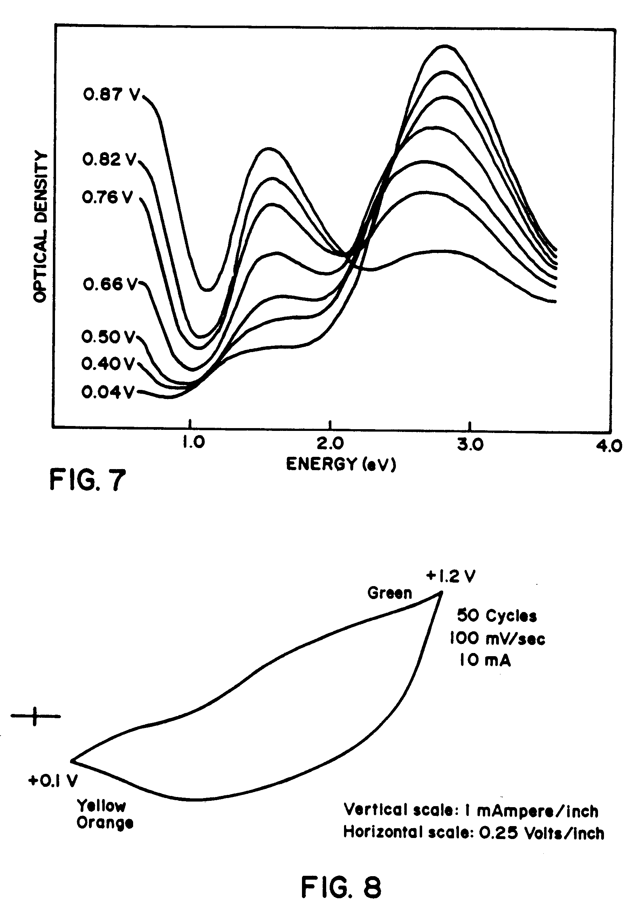

Electrochemical cells were constructed as in Example 14 in order to demonstrate electrochemical doping and charge storage via in situ optoelectrochemical spectroscopy. Figures 6 and 7 depict a series of vis-near ir spectra of the P3-BTSNa and methyl P3-BTS respectively, taken with the cells charged to successively higher open circuit voltages. As in Example 14, the results were found to be typical of conducting polymers in that the π-π* transition was depleted with a concomitant shift of oscillator strength into two characteristic infrared bands. As in Example 14, the results of Figures 6 and 7 demonstrate both reversible charge storage and electrochromism.

### Example 16

### Polymerization and Analysis of Poly(Thiophene-3-(2-Ethanesulfonic acid)(n=2)

The polymeric sodium salt of thiophene-3-(2-ethanesulfonic acid) (Formula I, Ht=S, Y₁=H, , R =-CH₂CH₂-, X=SO₃, M=H) was prepared as outlined above, dissolved in water and subjected to ion exchange chromatography on the acid form of a cation exchange resin. The results of atomic absorption analysis of the dark red-brown effluent indicated complete replacement of sodium by hydrogen. Figure 8 shows the results of cyclic voltammetry carried out on films of the polymer ("P3-ETSH"/ITO glass working electrode, platinum counterelectrode, and a silver/silver chloride reference electrode in acetonitrile with fluoroboric acid-trifluoroacetic acid as electrolyte). The figure indicates that P3-ETSH is an electrochemically robust polymer when cycled between +0.1 and +1.2V versus silver/silver chloride in a strongly acidic medium. There are two closely spaced oxidation waves, the first of which corresponds to a change in color from orange to green. The polymer could be cycled and corresponding color changes observed without noticeable change in stability at 100 mV/sec.

Electrochemical cells were constructed in glass to demonstrate electrochemical doping and charge storage via in situ optoelectrochemical spectroscopy, substantially as in the previous two Examples. The cells consisted of a film of the polymer on ITO glass (anode), platinum counterelectrode (cathode) and a silver/silver chloride reference electrode in acetonitrile with fluoroboric acid-trifluoroacetic acid as electrolyte.

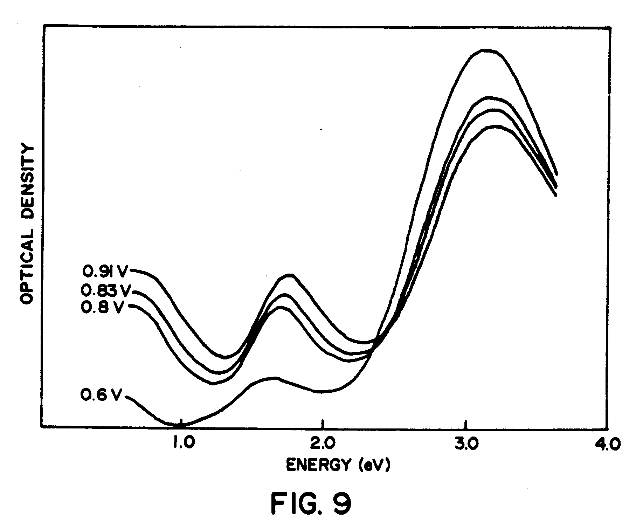

Figure 9 depicts a series of vis-near ir spectra of the P3-ETSH taken with the cell charged to a series of successively higher open circuit voltages. In this case, the polymer was observed to spontaneously dope in the strongly acidic electrolyte solution. The results of Figure 9 demonstrate both reversible charge storage and electrochromism. Control of the self-doping level for brief periods of time was achieved by imposing a voltage lower than the equilibrium circuit voltage.

### Example 17

### Preparation of Polymer Composite

Poly(thiophene-3-(2-ethanesulfonic acid) (Formula I, Ht=S, Y₁=H, R=-CH₂CH₂-, X=SO₃, M=H, "P3-ETSH") as prepared in Example 16 was used to prepare a composite as follows. The compound was admixed with a solution of polyvinyl alcohol in water, and films of the neutral polymer were cast. Free standing deep orange films (indicating charge neutrality, as opposed to the blue-black zwitterionic polymers) cast from the prepared solution had excellent mechanical properties (soft, smooth and flexible) and could be chemically doped and undoped by compensation. This method of making conducting polymer composites is broadly applicable to the use of any water-soluble polymer in conjunction with P3-ETSH or P3-BTSH.

### Example 18

### Preparation of Polymer of 2,5-Dicarboxyethyl-1,4-Cyclohexanedione and p-Phenylenediamine

To a suspension of 8.51g (33.21 mmole) of 2,5-dicarboxyethyl-1,4-cyclohexanedione in 380 ml of freshly distilled butanol was added 3.59 g of p-phenylenediamine in 20 ml of butanol, followed by 40 ml of glacial acetic acid. The resulting mixture was heated to reflux for a period of 36 hrs, then it was exposed to oxygen by refluxing over a period of twelve hours, was hot filtered, the solid was washed with ether and extracted in a Soxhlet extractor with the following solvents: chloroform (6 days), chlorobenzene (5 days), and ether (4 days), This treatment afforded a dark solid (8.42 g). Elemental analysis calcd. for C₁₈H₁₈N₂O₄: C, 65.84; H, 6.14; H, 8.53. Found: C, 65.55; H, 6.21; H, 8.70. Ir (KBr, ν cm-1): 3350w, 3240w, 2980m, 2900w, 1650s, 1600s, 1510s, 1440m, 1400w, 1220s, 1090w, 1065s, 820w, 770m, 600w, 495w.

### Example 19

### Polyaniline Dicarboxylic Acid

The above polymer diester is suspended in DMF and treated with a solution of 50% (w/w) sodium hydroxide. The reaction mixture is then heated to 100°C for 48 hr under strictly anaerobic conditions to exclude oxygen. Upon cooling the mixture, it is poured into ice/HCl and filtered. The infrared spectrum of the product should show the following characteristic absorption peaks: 3100-2900br, 1600s, 1500s, 1210s.

## Claims (Claims for the following Contracting State(s): BE, CH, DE, FR, GB, IT, LI, LU, NL, SE)

1. A conducting self-doped water-soluble polymer having along its backbone a π-electron conjugated system which comprises from 100 to 500 monomer units between about 0.01 and 100 mole % of said units having at least one Bronsted acid group attached by a covalent linkage, wherein said monomer units having said Bronsted acid group covalently linked thereto are selected from the following structures (I) or (II): 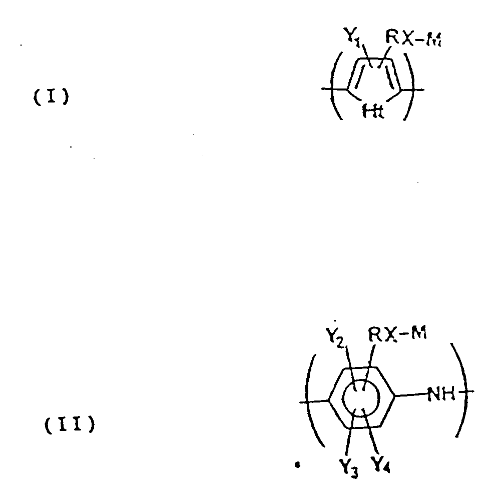 wherein Ht is a NH, S, O, Se or Te, Y₁, Y₂, Y₃ and Y₄ are independently selected from the group consisting of hydrogen and -R-X-M, wherein R is a linear or branched alkyl, ether, ester or amide moiety having from 1 to 10 carbon atoms and X is a Bronsted acid anion and M is an atom which when oxidized yields a positive monovalent counterion.

2. The polymer of claim 1, wherein Y₁, Y₂ and Y₄ are hydrogen, R is a straight chain alkyl or ether group having from 1 to 10 carbon atoms, X is CO₂ or SO₃, and M is selected from the group consisting of H, Li, Na and K.

3. The polymer of claim 2, wherein Ht is NH or S, R is a linear alkyl having from 2 to 4 carbon atoms, and M is selected from the group consisting of H, Li and Na.

4. A homopolymer according to claim 1.

5. A copolymer according to claim 1.

6. A zwitterionic polymer according to claim 1.

7. The zwitterionic polymer of claim 1, wherein said monomer units are selected from the following structures 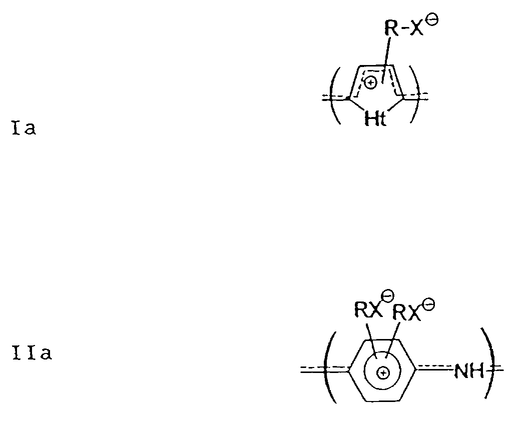 wherein Ht is NH, S, O, Se or Te, R is a linear or branched alkyl, ether, ester or amide moiety having from 1 to 10 carbon atoms and X is a Bronsted acid anion.

8. The zwitterionic polymer of claim 7, wherein R is a straight chain alkyl or ether group having from 1 to 10 carbon atoms and X is CO₂ or SO₃.

9. The zwitterionic polymer of claim 8, wherein Ht is NH or S and R is a linear alkyl having from 2 to 4 carbon atoms.

10. An electrode for use an electrochemical cell, comprising a conductive substrate coated with a polymer according to claim 1.

11. An electrode for use as an electrochemical cell, comprising a conductive substrate coated with a polymer according to claim 6.

12. A method of making a water soluble self-doped zwitterionic polymer with monomer units of the formula I as defined in any one of claims 1 to 9 comprising the steps of:
providing an electrolyte solution comprising a monomer having the structure 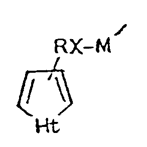 wherein Ht is NH, S, O, Se or Te; M' is an atom which when oxidized yields a positive monovalent counterion or M' is methyl; X is a Bronsted acid group; R is a linear or branched alkyl, ether, ester or amide having from 1 to 10 carbon atoms;
immersing in said electrolyte solution, a working electrode and a counterelectrode; and
applying a voltage across said working electrode and said counterelectrode, whereby polymerization of said monomer at said working electrode is effected to produce a polymer having a recurring structure of the formula 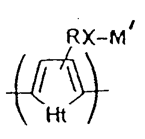 and, when M' is methyl, converting it to an atom M which when oxidised yields a positive monovalent counterion.

13. The method of claim 12, wherein said polymerization is carried out at a temperature of between about -30°C and 25°C.

14. The method of claim 12, wherein said monomer is selected from the group consisting of thiophene-3-acetic acid, methyl thiophene-3-(2-ethanesulfonate), and methyl thiophene-3-(4-butanesulfonate).

15. A compound useful in the preparation of conducting polymers comprising methyl thiophene-3-(2-ethanesulfonate).

16. A compound useful in the preparation of conducting polymers comprising methyl thiophene-3-(4-butanesulfonate).

17. A method of preparing a self-doping polyaniline, comprising the steps of:
providing a polyaniline diester; and
treating said diester with hydroxide to convert said diester to the corresponding dicarboxylic acid.

18. An aqueous solution useful for casting conducting polymeric films, comprising: (a) a self-doped polymer comprised of from 100 to 500 monomer units, wherein 0.01 to 100% of the monomer units have the structure 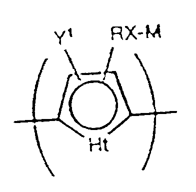 wherein Ht is NH, S, O, Se or Te, Y₁ is hydrogen or RX-M wherein R is a linear or branched alkyl, ester, ether or amide moiety containing from 1 to 10 carbon atoms, X is a Bronsted acid anion, and M is an atom which when oxidised yields a positive monovalent counterion which provides the polymer with its self-doped property; and (b) water present in an amount at least sufficient to dissolve the polymer.

19. The composition of claim 18, wherein Ht is NH or S.

20. The composition of claim 19, wherein Ht is S.

21. The composition of any one of claims 18 to 20 wherein Y¹ is hydrogen.

22. The composition of any one of claims 18 to 21 wherein X is CO₂ or SO₃.

23. The composition of any one of claims 18 to 22 wherein R is a straight chain alkyl group having between 2 and 4 carbon atoms and X is SO₃.

24. The composition of any one of claims 18 to 23 wherein M is H, Li, Na or K.

## Claims (Claims for the following Contracting State(s): AT)

1. A method of making a water soluble self-doped zwitterionic polymer with monomer units of the formula I 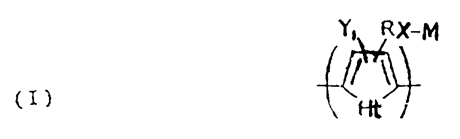 wherein Ht is a NH, S, O, Se or Te, Y₁, is hydrogen, wherein R is a linear or branched alkyl, ether, ester or amide moiety having from 1 to 10 carbon atoms and X is a Bronsted acid anion and M is an atom which when oxidized yields a positive monovalent counterion; comprising the steps of:
providing an electrolyte solution comprising a monomer having the structure 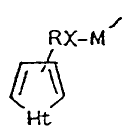 wherein Ht is NH, S, O, Se or Te; M' is an atom which when oxidized yields a positive monovalent counterion or M' is methyl; X is a Bronsted acid group; R is a linear or branched alkyl, ether, ester or amide having from 1 to 10 carbon atoms;
immersing in said electrolyte solution, a working electrode and a counterelectrode; and
applying a voltage across said working electrode and said counterelectrode, whereby polymerization of said monomer at said working electrode is effected to produce a polymer having a recurring structure of the formula 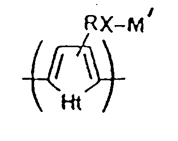 and, when M' is methyl, converting it to an atom M which when oxidised yields a positive monovalent counterion.

2. The method of claim 1, wherein R is a straight chain alkyl or ether group having from 1 to 10 carbon atoms, X is CO₂ or SO₃, and M is selected from the group consisting of H, Li, Na and K.

3. The method of claim 2, wherein Ht is NH or S, R is a linear alkyl having from 2 to 4 carbon atoms, and M is selected from the group consisting of H, Li and Na.

4. The method of claim 1, wherein said polymerization is carried out at a temperature of between about -30°C and 25°C.

5. The method of claim 1, wherein said monomer is selected from the group consisting of thiophene-3-acetic acid, methyl thiophene-3-(2-ethanesulfonate), and methyl thiophene-3-(4-butanesulfonate).

6. A method of preparing a self-doping polyaniline, comprising the steps of:
providing a polyaniline diester: and
treating said diester with hydroxide to convert said diester to the corresponding dicarboxylic acid.

## Patentansprüche (Patentansprüche für folgende(n) Vertragsstaat(en): BE, CH, DE, FR, GB, IT, LI, LU, NL, SE)

1. Leitfähiges selbst-gedoptes wasserlösliches Polymer mit einem konjugierten π-Elektronen-System entlang seines Rückgrates, welches 100 bis 500 Monomereinheiten umfaßt, zwischen etwa 0,01 und 100 mol-% der Einheiten weisen wenigstens eine Brønsted-Säuregruppe auf, die über eine kovalente Bindung angebracht ist, wobei die Monomereinheiten mit der kovalent daran gebundenen Brønsted-Säuregruppe aus den folgenden Strukturformeln (I) oder (II) ausgewählt sind: 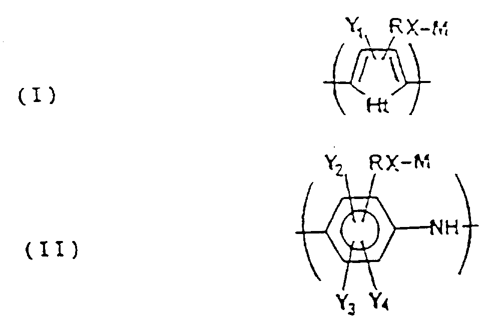 worin Ht gleich ein NH, S, O, Se oder Te ist, Y₁, Y₂, Y₃ und Y₄ unabhängig ausgewählt sind aus der Gruppe, die aus Wasserstoff und -R-X-M besteht, wobei R ein linearer oder verzweigter Alkyl-, Ether-, Ester- oder Amidrest mit 1 bis 10 Kohlenstoffatomen ist, und X ein Bronsted-Säureanion ist und M ein Atom ist, welches ein positives einwertiges Gegenion ergibt, wenn es oxidiert ist.

2. Polymer nach Anspruch 1, worin Y₁, Y₂ und Y₄ Wasserstoff sind, R eine geradkettige Alkyl- oder Ethergruppe mit 1 bis 10 Kohlenstoffatomen ist, X gleich CO₂ oder SO₃ ist und M aus der Gruppe ausgewählt ist, die aus H, Li, Na und K besteht.

3. Polymer nach Anspruch 2, worin Ht NH oder S ist, R ein lineares Alkyl mit 2 bis 4 Kohlenstoffatomen ist und M aus der Gruppe ausgewählt ist, die aus H, Li und Na besteht.

4. Ein Homopolymer gemäß Anspruch 1.

5. Ein Copolymer gemäß Anspruch 1.

6. Ein zwitterionisches Polymer gemäß Anspruch 1.

7. Zwitterionische Polymer nach Anspruch 1, worin die Monomereinheiten aus folgenden Strukturformeln ausgewählt sind: 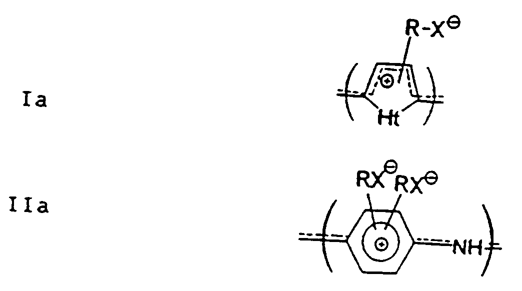 worin Ht gleich NH, S, O, Se oder Te ist, R ein linearer oder verzweigter Alkyl-, Ether-, Ester- oder Amidrest mit 1 bis 10 Kohlenstoffatomen ist und X ein Brønsted-Säureanion ist.

8. Zwitterionisches Polymer nach Anspruch 7, worin R eine geradkettige Alkyl- oder Ethergruppe mit 1 bis 10 Kohlenstoffatomen ist und X gleich CO₂ oder SO₃ ist.

9. Zwitterionisches Polymer nach Anspruch 8, worin Ht gleich NH oder S ist und R ein lineares Alkyl mit 2 bis 4 Kohlenstoffatomen ist.

10. Elektrode zur Anwendung als eine elektrochemische Zelle, umfassend ein leitfähiges Substrat, beschichtet mit einem Polymer gemäß Anspruch 1.

11. Elektrode zur Anwendung als eine elektrochemische Zelle, umfassend ein leitfähiges Substrat, beschichtet mit einem Polymer gemäß Anspruch 6.

12. Verfahren zur Herstellung eines wasserlöslichen selbstgedopten zwitterionischen Polymeren mit Monomereinheiten der Formel I, wie in irgendeinem der Ansprüche 1 bis 9 definiert, umfassend die Schritte:
Bereitung einer Elektrolytlösung umfassend ein Monomer mit der Struktur 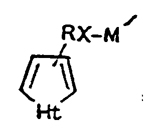 worin Ht gleich NH, S, O, Se oder Te ist; M' ein Atom ist, das ein positives einwertiges Gegenion ergibt, wenn es oxidiert ist, oder M' ist Methyl; X ist eine Bronsted-Säuregruppe; R ist ein linearer oder verzweigter Alkyl-, Ether-, Ester- oder Amidrest mit 1 bis 10 Kohlenstoffatomen;
Einbringen einer Arbeitselektrode und einer Gegenelektrode in die Elektrolytlösung; und
Anlegen einer Spannung zwischen der Arbeitselektrode und der Gegenelektrode, wobei eine Polymerisation des Monomers bei der Arbeitselektrode bewirkt wird, so daß ein Polymer erhalten wird mit wiederkehrenden Strukturen der Formel 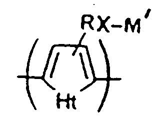 und, wenn M' Methyl ist, Umwandlung desselben in ein Atom M, das ein positives einwertiges Gegenion ergibt, wenn es oxidiert ist.

13. Verfahren nach Anspruch 12, worin die Polymerisation bei einer Temperatur zwischen etwa -30°C und 25°C durchgeführt wird.

14. Verfahren nach Anspruch 12, worin das Monomer ausgewählt ist aus der Gruppe bestehend aus Thiophen-3-Essigsäure, Methylthiophen-3-(2-Ethansulfonat) und Methylthiophen-3-(4-Butansulfonat).

15. Verbindung zur Herstellung eines leitfähigen Polymers, umfassend Methylthiophen-3-(2-Ethansulfonat).

16. Verbindung zur Herstellung eines leitfähigen Polymers, umfassend Methylthiophen-3-(4-Butansulfonat).

17. Verfahren zur Herstellung eines selbst-dotierenden Polyanilins, umfassend die Schritte:
Bereitung eines Polyanilindiesters und
Behandlung des Diesters mit Hydroxid, um den Diester in die entsprechende Dicarbonsäure umzuwandeln.

18. Wäßrige Lösung zur Bildung von leitfähigen polymeren Filmen, umfassend: (a) ein selbst-gedoptes Polymer, umfaßt von 100 bis 500 Monomereinheiten, worin 0,01 bis 100% der Monomereinheiten die Struktur 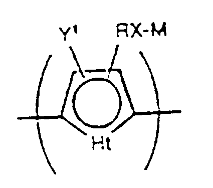 haben, worin Ht gleich NH, S, O, Se oder Te ist, Y₁ Wasserstoff oder RX-M ist, wobei R ein linearer oder verzweigter Alkyl-, Ester-, Ether- oder Amidrest mit 1 bis 10 Kohlenstoffatomen ist, X ein Brønsted-Säureanion ist und M ein Atom ist, das ein positives einwertiges Gegenanion ergibt, wenn es oxidiert ist, welches das Polymer mit dessen selbst-gedopter Eigenschaft ausstattet; und (b) Wasser in einer Menge vorhanden ist, die wenigstens ausreicht, um das Polymer zu lösen.

19. Zusammensetzung nach Anspruch 18, worin Ht gleich NH oder S ist.

20. Zusammensetzung nach Anspruch 19, worin Ht gleich S ist.

21. Zusammensetzung nach irgendeinem der Ansprüche 18 bis 20, worin Y¹ Wasserstoff ist.

22. Zusammensetzung nach irgendeinem der Ansprüche 18 bis 21, worin X gleich CO₂ oder SO₃ ist.

23. Zusammensetzung nach irgendeinem der Ansprüche 18 bis 22, worin R eine geradkettige Alkylgruppe mit zwischen 2 und 4 Kohlenstoffatomen ist und X gleich SO₃ ist.

24. Zusammensetzung nach irgendeinem der Ansprüche 18 bis 23, worin M gleich H, Li, Na oder K ist.

## Patentansprüche (Patentansprüche für folgende(n) Vertragsstaat(en): AT)

1. Verfahren zur Herstellung eines wasserlöslichen selbstgedopten zwitterionischen Polymeren mit Monomereinheiten der Formel I, 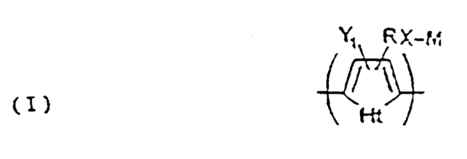 worin Ht gleich ein NH, S, O, Se oder Te ist, Y₁ gleich Wasserstoff ist, wobei R ein linearer oder verzweigter Alkyl-, Ether-, Ester- oder Amidrest mit 1 bis 10 Kohlenstoffatomen ist, und X ein Brønsted-Säureanion ist und M ein Atom ist, welches ein positives einwertiges Gegenion ergibt, wenn es oxidiert ist; umfassend die Schritte:
Bereitung einer Elektrolytlösung umfassend ein Monomer mit der Struktur 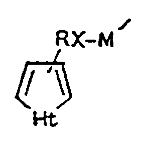 worin Ht gleich NH, S, O, Se oder Te ist; M' ein Atom ist, das ein positives einwertiges Gegenion ergibt, wenn es oxidiert ist, oder M' ist Methyl; X ist eine Brønsted-Säuregruppe; R ist ein linearer oder verzweigter Alkyl-, Ether-, Ester- oder Amidrest mit 1 bis 10 Kohlenstoffatomen;
Einbringen einer Arbeitselektrode und einer Gegenelektrode in die Elektrolytlösung; und
Anlegen einer Spannung zwischen der Arbeitselektrode und der Gegenelektrode, wobei eine Polymerisation des Monomers bei der Arbeitselektrode bewirkt wird, so daß ein Polymer erhalten wird mit wiederkehrenden Strukturen der Formel 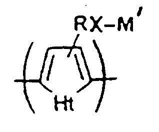 und, wenn M' Methyl ist, Umwandlung desselben in ein Atom M, das ein positives einwertiges Gegenion ergibt, wenn es oxidiert ist.

2. Verfahren nach Anspruch 1, worin R eine geradkettige Alkyl- oder Ethergruppe mit 1 bis 10 Kohlenstoffatomen ist, X gleich CO₂ oder SO₃ ist und M aus der Gruppe ausgewählt ist, die aus H, Li, Na und K besteht.

3. Verfahren nach Anspruch 2, worin Ht NH oder S ist, R ein lineares Alkyl mit 2 bis 4 Kohlenstoffatomen ist und M aus der Gruppe ausgewählt ist, die aus H, Li und Na besteht.

4. Verfahren nach Anspruch 1, worin die Polymerisation bei einer Temperatur zwischen etwa -30°C und 25°C durchgeführt wird.

5. Verfahren nach Anspruch 1, worin das Monomer ausgewählt ist aus der Gruppe bestehend aus Thiophen-3-Essigsäure, Methylthiophen-3-(2-Ethansulfonat) und Methylthiophen-3-(4-Butansulfonat).

6. Verfahren zur Herstellung eines selbst-dotierenden Polyanilins, umfassend die Schritte:
Bereitung eines Polyanilindiesters und
Behandlung des Diesters mit Hydroxid, um den Diester in die entsprechende Dicarbonsäure umzuwandeln.

## Revendications (Revendications pour l'(les) Etat(s) contractant(s) suivant(s): BE, CH, DE, FR, GB, IT, LI, LU, NL, SE)

1. Polymère conducteur hydrosoluble et auto-dopé, présentant le long de son squelette un système d'électrons π conjugués et comportant de 100 à 500 motifs monomères, ces motifs comportant, en une proportion située entre environ 0,01 et 100 % en moles, au moins un groupe acide de Brönsted attaché par un maillon covalent, polymère dans lequel lesdits motifs monomères auxquels sont liés lesdits groupes acides de Brönsted sont choisis parmi les structures suivantes (I) ou (II) : 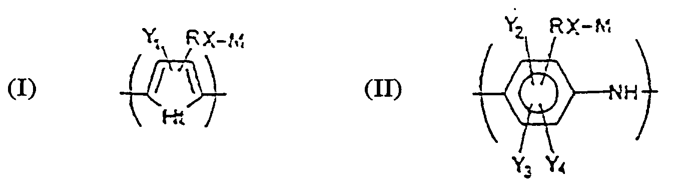 dans lesquelles Ht représente NH, S, O, Se ou Te, Y₁, Y₂, Y₃ et Y₄ sont indépendamment choisis dans le groupe constitué par des atomes d'hydrogène et des groupes -R-X-M, R représente un fragment alkyle, éther, ester, ou amide, linéaire ou ramifié, comportant de 1 à 10 atomes de carbone, X représente un anion acide de Brönsted et M représente un atome qui, lorsqu'il est oxydé, fournit un contre-ion positif monovalent.

2. Polymère conforme à la revendication 1, dans lequel Y₁, Y₂ et Y₄ représentent des atomes d'hydrogène, R représente un groupe alkyle ou éther à chaîne droite comportant de 1 à 10 atomes de carbone, X représente CO₂ ou SO₃, et M est choisi dans le groupe constitué par H, Li, Na et K.

3. Polymère conforme à la revendication 2, dans lequel Ht représente NH ou S, R représente un groupe alkyle linéaire comportant de 2 à 4 atomes de carbone, et M est choisi dans le groupe constitué par H, Li et Na.

4. Homopolymère conforme à la revendication 1.

5. Copolymère conforme à la revendication 1.

6. Polymère zwitterionique conforme à la revendication 1.

7. Polymère zwitterionique conforme à la revendication 1, dans lequel lesdits motifs monomères sont choisis parmi les structures suivantes : 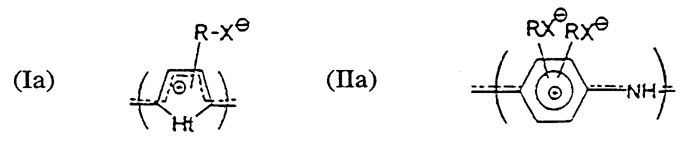 dans lesquelles Ht représente NH, S, O, Se ou Te, R représente un fragment alkyle, éther, ester ou amide, linéaire ou ramifié, comportant de 1 à 10 atomes de carbone, et X représente un anion acide de Brönsted.

8. Polymère zwitterionique conforme à la revendication 7, dans lequel R représente un groupe alkyle ou éther à chaîne droite comportant de 1 à 10 atomes de carbone, et X représente CO₂ ou SO₃.

9. Polymère zwitterionique conforme à la revendication 8, dans lequel Ht représente NH ou S, et R représente un groupe alkyle linéaire comportant de 2 à 4 atomes de carbone.

10. Electrode destinée à être utilisée dans une pile électrochimique, comprenant un substrat conducteur revêtu d'un polymère conforme à la revendication 1.

11. Electrode destinée à être utilisée dans une pile électrochimique, comprenant un substrat conducteur revêtu d'un polymère conforme à la revendication 6.

12. Procédé de préparation d'un polymère hydrosoluble zwitterionique auto-dopé, comportant des motifs monomères de formule I et défini dans l'une quelconque des revendications 1 à 9, procédé comportant les étapes suivantes :
préparer une solution d'électrolyte contenant un monomère présentant la structure 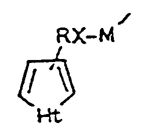 dans laquelle Ht représente NH, S, O, Se ou Te, M' représente un atome qui, lorsqu'il est oxydé, fournit un contre-ion positif monovalent, ou M' représente un groupe méthyle, X représente un groupe acide de Brönsted, et R représente un fragment alkyle, éther, ester ou amide, linéaire ou ramifié, comportant de 1 à 10 atomes de carbone ;
plonger une électrode de travail et une contre-électrode dans cette solution d'électrolyte ; et
appliquer une tension entre l'électrode de travail et la contre-électrode, grâce à quoi s'effectue, à l'électrode de travail, la polymérisation dudit monomère en un polymère possédant une structure répétitive de formule : 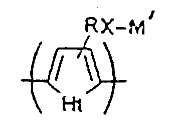 et, quand M' représente un groupe méthyle, le remplacer par un atome M qui, lorsqu'il est oxydé, fournit un contre-ion positif monovalent.

13. Procédé conforme à la revendication 12, dans lequel ladite polymérisation est effectuée à une température située entre environ -30°C et 25°C.

14. Procédé conforme à la revendication 12, dans lequel ledit monomère est choisi dans le groupe constitué par l'acide β-thiénylacétique, le 2-(β-thiényl)-éthanesulfonate de méthyle et le 4-(β-thiényl)-butanesulfonate de méthyle.

15. Composé utile dans la préparation de polymères conducteurs, comprenant le 2-(β-thiényl)-éthanesulfonate de méthyle.

16. Composé utile dans la préparation de polymères conducteurs, comprenant le 4-(β-thiényl)-butanesulfonate de méthyle.

17. Procédé de préparation d'une polyaniline à auto-dopage, comprenant les étapes suivantes :
préparer un poly(aniline-diester) ; et
traiter ce diester avec un hydroxyde pour transformer ce diester en l'acide dicarboxylique correspondant.

18. Solution aqueuse utile pour former, par coulée, des films de polymère conducteur, comprenant : (a) un polymère auto-dopé, constitué de 100 à 500 motifs monomères, de 0,01 % à 100 % de ces motifs monomères présentant la structure : 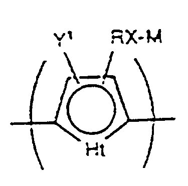 dans laquelle Ht représente NH, S, O, Se ou Te, Y¹ représente un atome d'hydrogène ou un groupe -R-X-M, R représente un fragment alkyle, éther, ester ou amide, linéaire ou ramifié, comportant de 1 à 10 atomes de carbone, X représente un anion acide de Brönsted et M représente un atome qui, lorsqu'il est oxydé, fournit un contre-ion positif monovalent, qui confère au polymère sa propriété d'auto-dopage ; et (b) de l'eau en une quantité au moins suffisante pour dissoudre le polymère.

19. Composition conforme à la revendication 18, dans laquelle Ht représente NH ou S.

20. Composition conforme à la revendication 19, dans laquelle Ht représente S.

21. Composition conforme à l'une quelconque des revendications 18 à 20, dans laquelle Y¹ représente un atome d'hydrogène.

22. Composition conforme à l'une quelconque des revendications 18 à 21, dans laquelle X représente CO₂ ou SO₃.

23. Composition conforme à l'une quelconque des revendications 18 à 22, dans laquelle R représente un groupe alkyle à chaîne droite comportant de 2 à 4 atomes de carbone et X représente SO₃.

24. Composition conforme à l'une quelconque des revendications 18 à 23, dans laquelle M représente H, Li, Na ou K.

## Revendications (Revendications pour l'(les) Etat(s) contractant(s) suivant(s): AT)

1. Procédé de préparation d'un polymère hydrosoluble zwitterionique auto-dopé, comportant des motifs monomères de formule I : 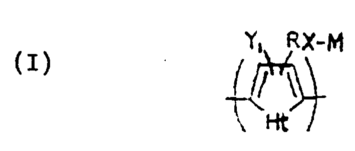 dans laquelle Ht représente NH, S, O, Se ou Te, Y₁ représente un atome d'hydrogène, R représente un fragment alkyle, éther, ester, ou amide, linéaire ou ramifié, comportant de 1 à 10 atomes de carbone, X représente un anion acide de Brönsted et M représente un atome qui, lorsqu'il est oxydé, fournit un contre-ion positif monovalent ; ledit procédé comportant les étapes suivantes :
préparer une solution d'électrolyte contenant un monomère présentant la structure 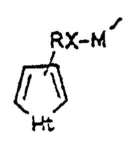 dans laquelle Ht représente NH, S, O, Se ou Te, M' représente un atome qui, lorsqu'il est oxydé, fournit un contre-ion positif monovalent, ou M' représente un groupe méthyle, X représente un groupe acide de Brönsted, et R représente un fragment alkyle, éther, ester ou amide, linéaire ou ramifié, comportant de 1 à 10 atomes de carbone ;
plonger une électrode de travail et une contre-électrode dans cette solution d'électrolyte ; et
appliquer une tension entre l'électrode de travail et la contreélectrode, grâce à quoi s'effectue, à l'électrode de travail, la polymérisation dudit monomère en un polymère possédant une structure répétitive de formule : 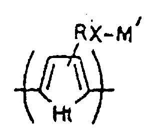 et, quand M' représente un groupe méthyle, le remplacer par un atome M qui, lorsqu'il est oxydé, fournit un contre-ion positif monovalent.

2. Procédé conforme à la revendication 1, dans lequel R représente un groupe alkyle ou éther à chaîne droite comportant de 1 à 10 atomes de carbone, X représente CO₂ ou SO₃, et M est choisi dans le groupe constitué par H, Li, Na et K.

3. Procédé conforme à la revendication 2, dans lequel Ht représente NH ou S, R représente un groupe alkyle linéaire comportant de 2 à 4 atomes de carbone, et M est choisi dans le groupe constitué par H, Li et Na.

4. Procédé conforme à la revendication 1, dans lequel ladite polymérisation est effectuée à une température située entre environ -30°C et 25°C.

5. Procédé conforme à la revendication 1, dans lequel ledit monomère est choisi dans le groupe constitué par l'acide β-thiénylacétique, le 2-(β-thiényl)-éthanesulfonate de méthyle et le 4-(β-thiényl)-butanesulfonate de méthyle.

6. Procédé de préparation d'une polyaniline à auto-dopage, comprenant les étapes suivantes :
préparer un poly(aniline-diester) ; et
traiter ce diester avec un hydroxyde pour transformer ce diester en l'acide carboxylique correspondant.
